Europäisches Patentamt

European Patent Office

Office européen des brevets

(19)

(11) EP 1 431 785 A1

(12) **EUROPEAN PATENT APPLICATION**

(43) Date of publication:
23.06.2004 Bulletin 2004/26

(51) Int Cl.$^7$: **G02B 6/34**, H04B 10/18

(21) Application number: 02360359.0

(22) Date of filing: 18.12.2002

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(71) Applicant: **ALCATEL**
**75008 Paris (FR)**

(72) Inventors:
• **Frignac, Yann**
**75005 Paris (FR)**
• **Bigo, Sébastien**
**91300 Massy (FR)**

(74) Representative: **Rausch, Gabriele, Dr. et al**
**Alcatel**
**Intellectual Property Department, Stuttgart**
**70430 Stuttgart (DE)**

(54) **A method for controlling the transmission performance of an optical transmission line, an optical transmission system and a control facility therefore**

(57)    The invention relates to a method for controlling the transmission performance of an optical transmission line (OL) with tuneable group velocity dispersion compensation means (C1, C2, C3) comprising at least one dispersion pre-compensation device (C1) and one further dispersion compensating device (C2,C3) within said line and/or at the lines end, wherein the dispersion compensation means (C1, C2, C3) are set to achieve a certain residual dispersion at the lines end for a minimisation of the effect of group velocity dispersion without considering the impact of non linear phase modulation along the line, the signal quality degradation effects due to a non-linear phase modulation along said line (OL) is calculated for said setting and further for at least one further alternative setting with the same residual dispersion, the results of said calculations are compared to find an optimum setting of said dispersion compensation means (C1, C2, C3), and an optical transmission system and a control facility therefore.

Fig.1

**Description**

The invention relates to a method according to the preamble of claim 1, an optical transmission system according to the preamble of claim 6 and a control facility according to the preamble of claim 7 therefore.

In high bit rate optical transmission systems, managing the length and the location of various fiber types along a transmission line is a well-known technique to reduce the transmission impairments mainly due to a non-linear transmission behaviour and to the group velocity dispersion (GVD) behaviour of the transmission fibers.

A transmission link often consists of a number of fiber spans each comprising one piece of transmission fiber with a certain positive dispersion coefficient and one piece of dispersion compensating fiber with a certain negative dispersion coefficient of a tuneable length. Moreover, pre-compensation fiber pieces in the transmitter and post-compensation fiber pieces at receivers side with each tuneable positive or negative dispersion coefficients are switched in line. For an overall dispersion management of said link, many parameters have to be tuned at a time. Dispersion management consists of a careful tuning of the length of said pieces of dispersion compensating fiber.

For an evaluation of the transmission behaviour considering non linear transmission effects additionally to dispersion effects, non linear differential equations have to be solved. These equations cannot be solved in mathematical analytical way.

A well known solution for a calculation of signal degradations due to said effects is to perform numerical simulations based on a so-called Split Step Fourier Method (involving Fourier transformation calculations). Different configurations of possible dispersion device settings, e.g. different settings of said tuneable line lengths of dispersion compensating fibres are evaluated to select that one, which gives the best transmission performance. As the dispersion management allows for variations of multiple parameters, investigations with comprehensive numerical simulations considering a wide range of possible solutions are extremely time-consuming. The problem becomes even more complex in all-optical transparent networks, wherein, for each optical path, it is necessary to find an adapted dispersion management.

The object of the invention is to create a simple dispersion management method and corresponding devices, which avoid time consuming numerical calculations and which can be easily implemented in existing optical systems.

This object is achieved in accordance with the invention by a method according to the teaching of claim 1, an optical transmission system according to the teaching of claim 6 and a control facility according to the teaching of claim 7.

The basic idea of the invention is to separate the impact of non-linearity and dispersion along the propagation:

In a first step, the group velocity dispersion compensation means are set to achieve a certain residual dispersion at the input of a corresponding receiver for a minimisation of the effect of group velocity dispersion without regarding the impact of non linear phase modulation along the line.

In a second step, the signal quality degradation effects of non-linear phase modulation is calculated for variants of said setting each showing the same residual dispersion. The results of said calculations are compared to find the optimum result and the dispersion compensation means are then set to said optimum result.

Further developments of the invention can be gathered from the dependent claims and the following description.

In the following the invention will be explained further making reference to the attached drawings in which:

Fig.1    shows an exemplary optical transmission system according to the invention,

Fig.2    schematically shows a diagram depicting the cumulated dispersion along an optical line of said optical transmission system,

Fig.3    schematically shows further diagrams to illustrate intensity fluctuations of a transmitted optical signal,

Fig.4    shows a mathematical formula for an a calculation of said intensity fluctuations and

Fig.5    schematically shows simulation results for an optimisation of the transmission behaviour.

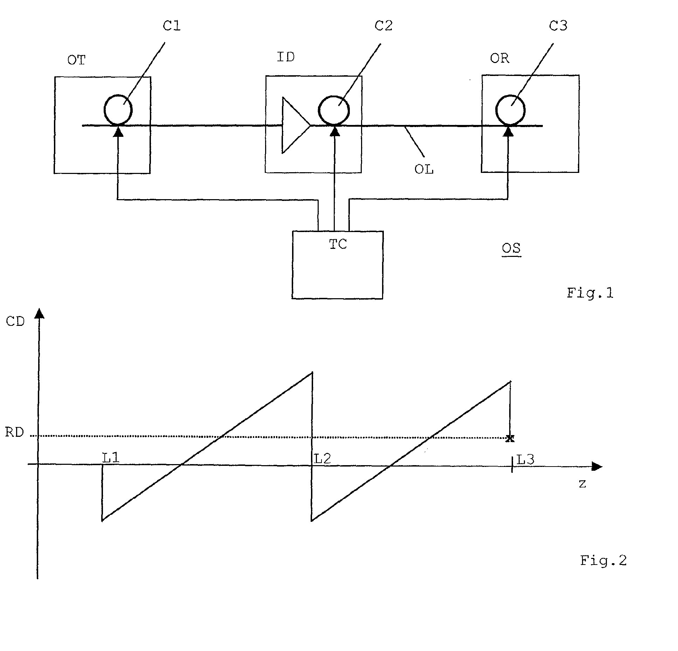

Fig.1 shows in a simple block diagram of an optical transmission system OS with an optical transmitter OT, an optical in-line device ID and an optical receiver OR, connected in series by means of an optical transmission line OL and thus showing by way of example of two spans; a first span running from the transmitter OT to the in-line device ID and a second span running from said in-line device ID to the receiver OR. Each the transmitter OT, the in-line device ID and the receiver OR show individually tuneable (group velocity) dispersion compensating means C1, C2 and C3 respectively, symbolised as fibre coils, wherein the dispersion compensating means of the transmitter OT are referred to as pre-compensation means C1, the compensating means of the in-line device ID are referred to as in-line compensation means C2 and the compensating means of the receiver OR are referred to as post-compensation means C3. The in-line device ID exemplary shown here further comprises an optical amplifier, e.g. an erbium doped fibre amplifier (EDFA) for compensation of power attenuation of the transmitted signals. Further a transmission control device TC and each an arrow from said transmission control device TC to said tuneable dispersion compensating means C1, C2 and C3, symbolising control information, are shown.

According to the prior art, the transmission control device TC evaluates the residual dispersion of the transmission line, e.g. by means of a phase comparison method, and generates control signals for tuning said tuneable dispersion compensating means C1, C2 and C3 such, that the residual dispersion is near zero (often, the optimum value does not exactly equal to zero) for compensation of the so-called group velocity dispersion along the optical line OL, that is responsible for an unwanted pulse spreading of the transmitted optical signal.

Fig.2 shows an example for a dispersion management in the optical transmission system of Fig.1 depicting the cumulated dispersion CD over the length z of the transmission line OL, running from the transmitter OT, located at the first point L1, over the in-line device ID, located at the second point L2, to the receiver OR, located at a third point L3. At the third point L3, the cumulated dispersion CD reaches a value RD denoting the residual dispersion.

The pre-compensation means C1 are tuned to a negative compensation value, e.g. by switching a dispersion compensating fiber of a defined length, i.e. of a fibre with a (fairly high) negative dispersion coefficient, in the transmission line. Due to a positive dispersion coefficient of the transmission fibre OL, the cumulated dispersion linearly rises to a positive value at the in-line device ID. There, the in-line compensation means C2 are tuned such, that the cumulated and the output of said in-line device ID is again negative. The cumulated dispersion then again rises linearly to a positive value at the receiver OR, where the post compensation means C3 are tuned to reach a residual dispersion RD of a wanted value (often a slightly positive value near zero dispersion). Thus, signal spreading due to dispersion will be mostly compensated.

However, optical signals are not only affected by said group velocity dispersion, but, as indicated in the introduction, also by a broad range of non-linear effects. One of these effects is known as phase modulation (self phase modulation and/or cross phase modulation), that is converted to an amplitude distortion at receivers side. The amount of amplitude distortion is strongly depending on the discourse of said dispersion along the transmission link; it shows a maximum in the absence of any dispersion. Dispersion and phase modulation are thus strongly dependent. A general rule known in the prior art to keep both the influence of the group velocity dispersion and non-linear influences low is to keep the dispersion locally sufficiently high and to ensure that the accumulated dispersion at the receivers side is close to zero for each channel.

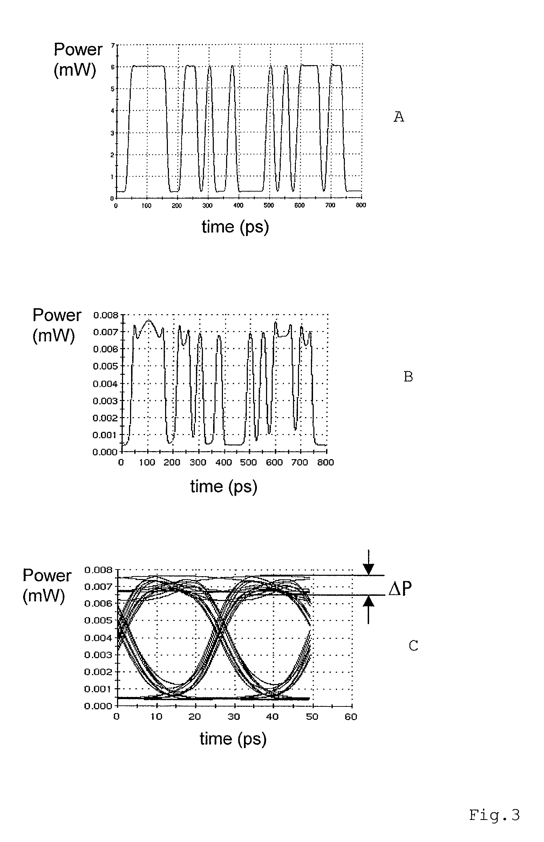

Fig. 3, by way of example, shows a simulation result for intensity fluctuations $\Delta P$ of a transmitted optical signal. Therefore, a set of diagrams A, B and C is shown, wherein the diagrams A and B depict the power in milli Watt (mW) of an optical input signal showing a so-called non return-to-zero (NRZ) modulation over the time in pico seconds (ps) at the entrance point (L1 of Fig.2) and the exit point (L3 of Fig.2) of a transmission line respectively. The diagram C at the bottom shows an eye diagram of the signal received at the exit point L3, wherein the intensity fluctuations $\Delta P$ marked. These intensity fluctuations $\Delta P$ damage the signal quality on receivers side and thus should be avoided as most as possible.

A well known sophisticated solution to optimise the transmission behaviour (dispersion compensation plus minimisation of the non-linear phase modulation) is to perform numerical simulations based on a so-called Split Step Fourier Method. However, as mentioned in the introduction, performing said numerical simulations is very difficult and extremely time consuming.

According to the invention a simple solution to minimise both the effects of group velocity dispersion and of non linear phase modulation with the following principle is applied:

In a first step, the compensation of the group velocity dispersion is performed, i.e. the dispersion means D1-D3 are tuned such, that a certain residual dispersion is reached.

In a second step, starting from the configuration found in the first step, the intensity fluctuations are minimised by calculation of variations of the settings of tuneable dispersion compensation means C1- C3, wherein the variations are performed such, that the residual dispersion remains unchanged. Further, out of said variations, one solution with the best performance is chosen.

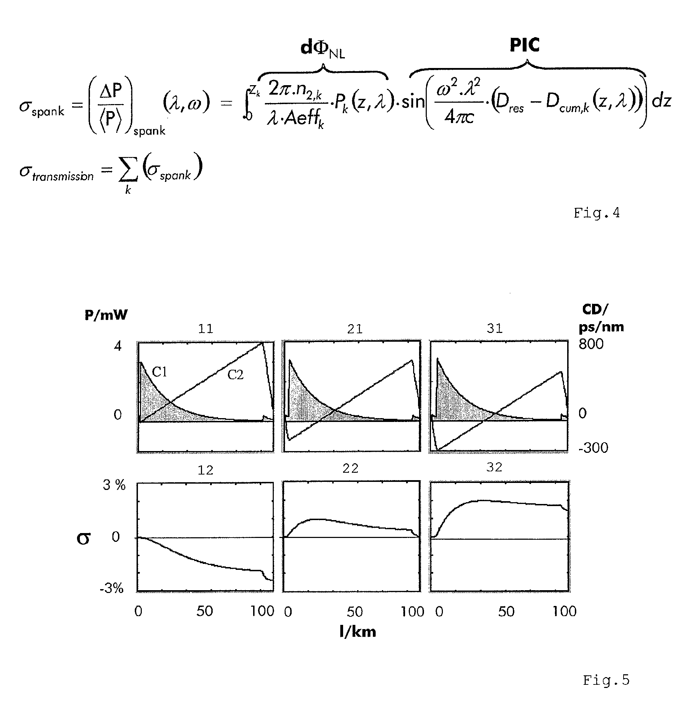

Fig.4 shows the mathematical formula for a calculation of the phase-to-intensity conversion (PIC) value $\sigma_{transmission}$ denoting the sum of the amounts of intensity fluctuation $\Delta P$ related to average signal power <P>, over all k fibre spans of a transmission line. The parameters $n_{2,k}$ and $A_{eff,k}$ represent the non-linear index and the effective area respectively of the fiber used in the span k, $\lambda$ denotes the signal wavelength, $P_k(z,\lambda)$ the optical power of the signal along the propagation at location z, $\omega$ denotes the modulation pulsation (= $2\pi$*bit rate), c the velocity of light $D_{res}$ the residual dispersion RD of the transmission, $D_{cum,k}(z,\lambda)$, the cumulated dispersion CD along the propagation at location z.

The parameters $n_{2,k}$ and $A_{eff,k}$ are provided by the fiber supplier. $z_k$ is the span length, that is known by the carrier, or that might be measured by an optical time-domain reflectometer (OTDR). The parameters $\lambda$, $\omega$ and $P_k(z,\lambda)$

are parameter chosen by the system supplier.

The power curve $P_k(z,\lambda)$ may be inferred from the known power at fiber input, the known fiber loss (given by the fiber supplier or measured by OTDR) and possibly the estimated gain profile if Raman amplification is used in the fiber.

Within a large majority of networks, only one single type of fiber is used. This means, that the parameters $n_{2,k}$ and $A_{eff,k}$ are not dependent on k for these networks.

The first part within the integral running along the length of the transmission link from zero to $z_k$ represents a non-linear phase modulation $d\Phi_{NL}$ occurring in an infinitesimal part dz of the transmission line. The second part within the integral represents the phase-to-intensity conversion PIC at this part dz.

In order to optimise the transmission behaviour of a transmission link in said second step, said intensity fluctuations $\Delta P$ and thus the PIC value $\sigma_{transmission}$ has to be minimised, keeping the residual dispersion RD at a desired value. The formula shown here allows for a fast calculation of said PIC value $\sigma_{transmission}$ for a set of different dispersion compensation settings.

As practical solution, first the in-line compensation means of a transmission link are set. Once the in-line dispersion is set, there is still an infinity of possible combinations of pre- and post dispersion compensations, that will all give the same residual dispersion value RD. One of these combinations is now selected as starting configuration. Then, the setting of the pre-compensation means is varied and for each of said variations, the amount of intensity fluctuations, i.e. the PIC value $\sigma_{transmission}$ is calculated. The calculation results are then compared to find out the variant with the least PIC value $\sigma_{transmission}$ .The optimum is thus obtained by successive iterations to converge to the zero PIC value $\sigma_{transmission}$ as close as possible. The pre-compensation means are then set to the calculated value and the post-compensation means are adjusted to obtain the wanted residual dispersion compensation. With this method, a quick optimisation of the transmission behaviour of a transmission link can be found. New calculations can start in certain time intervals or if the residual dispersion is found changed (e.g. due to thermal effects).

This calculation can be simplified as follows:

- the power evolution of the optical signal within one span (noted $P_k$) decreases exponentially by the sole action of fiber losses,
- The sinusoidal function evaluating the phase-to-intensity conversion by chromatic dispersion can be approximated as its argument (1st order Taylor development).

A further simplification can be done by the integration of the signal power at a fibre location z multiplied by the cumulated dispersion at the same location. This expression evaluated the mean pulse broadening in presence of non linearity in the whole span. Minimizing this expression will thus minimize the pulse to pulse non linear interactions.

Fig. 5 by way of example and schematically illustrates a procedure for the optimisation of a single span transmission fibre. For the calculation, the following parameters are assumed:

$$\lambda = 1.55\mu m$$

$$P1(z,\lambda) = P_0 \exp(-\alpha^*z), \text{ with } P_o = 3mW \text{ and } \alpha = 0.2dB/km$$

$$\omega = 2^*\pi^*40Gb/s$$

$$D_{res} = 30ps/nm$$

$$D_{cum}(z,\lambda) = D^*z = 8ps/(nm.km)^*z.$$

Fig.5 shows six diagrams 11, 21, 31, 12, 22 and 32. The upper diagrams 11, 21 and 31 each show a curve C1 depicting the power P, in a range of 0 mW (milli Watt) to 4 mW, in relation to the fibre location z in a range of 0 km to 100 km. Further, said diagrams each show different curves C2 depicting the cumulated dispersion CD in a range between - 300 and +800 ps/nm (picoseconds /nanometer). In the first diagram 11, no dispersion pre-compensation is effected. The cumulated dispersion curve runs linearly from zero nm/ps to 800 nm/ps before post-compensation. In the second diagram 21, dispersion pre-compensation is set to roughly -200 ps/nm. The cumulated dispersion curve thus runs linearly from -200 nm/ps to 600 nm/ps before post compensation. In the third diagram 31, dispersion pre-compensation is set to - 300 ps/nm. The cumulated dispersion curve thus runs linearly from -300 nm/ps to 500 nm/ps before post compensation. In the diagrams 12, 22, 32 below, each a curve showing the PIC value $\sigma_{(transmission)}$ in relation to the fibre location z is depicted. The first below diagram 12, related to the fist diagram 11 shows the value $\sigma$ starting with 0 percent running continuously to roughly -2 percent at the lines end. The second below diagram 22, related to the second diagram 21 shows the value $\sigma$ starting with 0 percent running to about 1 percent after about 30 km line length and decreasing to a value near zero percent at the lines end. The third below diagram 32, related to the third diagram 31 shows the value $\sigma$ starting with 0 percent running continuously to roughly 2 percent at the lines end. Thus, comparing said three cases, the optimum solution can be easily found in the second case with a pre-compensation of about -200 nm/ps.

The above shown principle for an optimization of pre-compensation uses only one integration and is, as a consequence, far less time consuming than the Split Step Fourier Method. It is thus very helpful for the management of a large number of spans experienced by different optical bands in a fiber network and particularly in the case of an added optical band in the network for which one has to find the best pre-compensation to apply.

The invention can be realised as computer program to be stored in existing dispersion management system. Such system may comprise one central control device (TC) controlling a number of tuneable dispersion devices or may comprise a number of de-centralised control devices.

The evaluation of the integral formula shown in Fig.4 or a simplified formula with a linearisation of the sinusoidal function can be performed by a digital processor by numerical approximation. Alternatively a table with solutions for different settings can be permanently stored in a memory accessible by said processor, whereof the setting of an optimum solution can be obtained depending on defined parameters.

**Claims**

1. A method for controlling or optimising the transmission performance (RD,$\sigma$) of an optical transmission line (OL) with tuneable group velocity dispersion compensation means comprising at least one dispersion pre-compensation device (C1) at the line input (L1) and one further dispersion compensating device (C2, C3) at a different place within (L2) and/or at the output (L3) of said line (OL), **characterised in, that** the following steps are performed:

   • the dispersion compensation means (C1, C2, C3) are set to achieve a certain residual dispersion (RD) behind the output (L3) of said line (OL) for a minimisation of signal degradation effects due to said group velocity dispersion, without considering the effects of non linear phase modulation effects along said line (OL),
   • the signal quality degradation ($\sigma$) due to said non-linear phase modulation effects along said line (OL) is evaluated for said setting of the dispersion compensation means (C1, C2, C3) and for at least one further alternative setting effecting the same residual dispersion (RD),
   • the results of said evaluations are compared to find an optimum setting and
   • the dispersion compensation means (C1, C2, C3) are tuned to said optimum setting.

2. A method according to claim 1, **characterised in, that** the evaluation of the signal quality degradation within one fibre span ($\sigma_{span\,k}$) of said transmission line is performed by an integration of basically the multiplication result of the signal power at the fibre location (z), a sinusoidal function evaluating the sum of the residual dispersion minus the cumulated dispersion at the fibre location (z) and further parameters over the fibre length (z) of said fibre span.

3. A method according to claim 2, **characterised in, that** the sinusoidal function is linearly approximated by its argument.

4. A method according to claim 3, **characterised in, that** for the evaluation of said signal quality degradation ($\sigma_{span\,k}$) an integration of the multiplication result of the signal power at the fibre location (z), the cumulated dispersion at said fibre location (z) over the fibre length (z) and a constant linked to the fiber span characteristics is carried out.

5. A method according to claim 1, **characterised in, that** in an optical system (OS), that allows for choosing between different optical transmission paths, a transmission optimisation is carried out by selecting that path, which has the optimum setting of the dispersion compensation distribution means (C1, C2, C3).

6. An optical transmission system (OS) comprising an optical transmission line (OL), tuneable dispersion compensation means (C1, C2, C3) with at least dispersion pre-compensation means (C1) and one further compensation device (C3) and a control device (TC) for controlling the setting of said dispersion compensation means (C1, C2, C3) to achieve a desired residual dispersion (RD), **characterised in, that** said control device (TC) is realised such, that

- the signal quality degradation (σ) due to non-linear phase modulation effects can be calculated for different settings of said dispersion compensation means (C1, C2, C3) and

- the results of said calculations can be compared to find an optimum setting for said dispersion compensation means (C1, C2, C3).

7. A control facility (TC) for controlling the optical transmission behaviour of a transmission line (OL) comprising tuneable dispersion compensation (C1, C2, C3) means with at least one dispersion pre-compensation device (C1) at the line input (L1) and one further dispersion compensating device (C2, C3) at a different place within (L2) and/ or at the output (L3) of said line (OL), **characterised in, that** said control device (TC) is realised such, that

- the signal quality degradation (σ) due to non-linear phase modulation effects can be calculated for different settings of said dispersion compensation means (C1, C2, C3) and

- the results of said calculations can be compared to find an optimum setting for said dispersion compensation means (C1, C2, C3).

Fig.1

Fig.2

Fig.3

$$\sigma_{spank} = \left(\frac{\Delta P}{\langle P \rangle}\right)_{spank}(\lambda, \omega) = \int_0^{z_k} \overbrace{\frac{2\pi.n_{2,k}}{\lambda \cdot Aeff_k} \cdot P_k(z,\lambda)}^{\mathbf{d\Phi}_{NL}} \cdot \overbrace{\sin\left(\frac{\omega^2.\lambda^2}{4\pi c} \cdot \left(D_{res} - D_{cum,k}(z,\lambda)\right)\right)}^{\mathbf{PIC}} dz$$

$$\sigma_{transmission} = \sum_k \left(\sigma_{spank}\right)$$

Fig.4

Fig.5

**European Patent Office**

## EUROPEAN SEARCH REPORT

Application Number

EP 02 36 0359

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 995 278 A (SASAKI SHINYA ET AL) 30 November 1999 (1999-11-30) * abstract * * column 2, line 53 - line 59 * * column 5, line 30 - column 6, line 10 * * column 7, line 14 - line 56 * | 1-7 | G02B6/34 H04B10/18 |
| X | EP 0 700 178 A (FUJITSU LTD) 6 March 1996 (1996-03-06) * abstract * | 1-7 | |
| X | LICHTMAN E ET AL: "Reduction of the nonlinear impairment in ultralong lightwave systems by tailoring the fibre dispersion" ELECTRONICS LETTERS, IEE STEVENAGE, GB, vol. 30, no. 4, 17 February 1994 (1994-02-17), pages 346-348, XP006000218 ISSN: 0013-5194 * page 347, left-hand column, paragraph 4 * * page 347, right-hand column, line 10 - line 12 * | 1-7 | |
| A | EP 0 684 709 A (AT & T CORP) 29 November 1995 (1995-11-29) | | **TECHNICAL FIELDS SEARCHED (Int.Cl.7)** G02B H04B |
| A | KIKUCHI N ET AL: "Fibre nonlinearity in dispersion-compensated conventional fibre transmission" ELECTRONICS LETTERS, IEE STEVENAGE, GB, vol. 32, no. 6, 14 March 1996 (1996-03-14), pages 570-572, XP006004909 ISSN: 0013-5194 | | |

-/--

The present search report has been drawn up for all claims

| Place of search | Date of completion of the search | Examiner |
|---|---|---|
| THE HAGUE | 8 May 2003 | Verbandt, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 431 785 A1

<table>
<tr><td>European Patent Office</td><td>EUROPEAN SEARCH REPORT</td><td>Application Number<br>EP 02 36 0359</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HENMI N ET AL: "A NEW DESIGN ARRANGEMENT OF TRANSMISSION FIBER DISPERSION FOR SUPPRESSING NONLINEAR DEGRADATION IN LONG-DISTANCE OPTICAL TRANSMISSION SYSTEMS WITH OPTICAL REPEATER AMPLIFIERS" JOURNAL OF LIGHTWAVE TECHNOLOGY, IEEE. NEW YORK, US, vol. 11, no. 10, 1 October 1993 (1993-10-01), pages 1615-1621, XP000418378 ISSN: 0733-8724 | | |
| A | WO 00 50944 A (PENG JIANGDE ;FENG KAI MING (US); CAI JIN XING (US); KHOSRAVANI RE) 31 August 2000 (2000-08-31) | | |
| A | EP 0 902 558 A (FUJITSU LTD) 17 March 1999 (1999-03-17) | | |
| A | BELLOTTI G ET AL: "Dependence of self-phase modulation impairments on residual dispersion in 10-Gb/s-based terrestrial transmissions using standard fiber" IEEE PHOTONICS TECHNOLOGY LETTERS, JULY 1999, IEEE, USA, vol. 11, no. 7, pages 824-826, XP002240454 ISSN: 1041-1135 | | |
| A | EP 0 685 947 A (AT & T CORP) 6 December 1995 (1995-12-06) | | |

TECHNICAL FIELDS SEARCHED (Int.Cl.7)

The present search report has been drawn up for all claims

| Place of search | Date of completion of the search | Examiner |
|---|---|---|
| THE HAGUE | 8 May 2003 | Verbandt, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

**EP 1 431 785 A1**

## ANNEX TO THE EUROPEAN SEARCH REPORT
## ON EUROPEAN PATENT APPLICATION NO.

EP 02 36 0359

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2003

| Patent document cited in search report | | Publication date | Patent family member(s) | | Publication date |
|---|---|---|---|---|---|
| US 5995278 | A | 30-11-1999 | JP | 3269713 B2 | 02-04-2002 |
| | | | JP | 7074699 A | 17-03-1995 |
| | | | US | 5880876 A | 09-03-1999 |
| | | | US | 5606445 A | 25-02-1997 |
| EP 0700178 | A | 06-03-1996 | JP | 8321805 A | 03-12-1996 |
| | | | EP | 0700178 A2 | 06-03-1996 |
| | | | US | 5991477 A | 23-11-1999 |
| | | | US | 5870213 A | 09-02-1999 |
| | | | US | 5717510 A | 10-02-1998 |
| | | | US | 5909297 A | 01-06-1999 |
| | | | US | 5815294 A | 29-09-1998 |
| | | | US | 5754322 A | 19-05-1998 |
| | | | US | 5896217 A | 20-04-1999 |
| | | | US | 5760937 A | 02-06-1998 |
| EP 0684709 | A | 29-11-1995 | DE | 69528415 D1 | 07-11-2002 |
| | | | EP | 0684709 A1 | 29-11-1995 |
| | | | JP | 3325748 B2 | 17-09-2002 |
| | | | JP | 7327012 A | 12-12-1995 |
| | | | US | 5608562 A | 04-03-1997 |
| WO 0050944 | A | 31-08-2000 | US | 6330383 B1 | 11-12-2001 |
| | | | AU | 5265500 A | 14-09-2000 |
| | | | CA | 2364322 A1 | 31-08-2000 |
| | | | EP | 1177470 A1 | 06-02-2002 |
| | | | JP | 2002543444 T | 17-12-2002 |
| | | | WO | 0050944 A1 | 31-08-2000 |
| | | | US | 2001021294 A1 | 13-09-2001 |
| EP 0902558 | A | 17-03-1999 | JP | 11088260 A | 30-03-1999 |
| | | | CN | 1211119 A | 17-03-1999 |
| | | | EP | 0902558 A2 | 17-03-1999 |
| | | | US | 6320687 B1 | 20-11-2001 |
| | | | US | 2002003646 A1 | 10-01-2002 |
| EP 0685947 | A | 06-12-1995 | US | 5539563 A | 23-07-1996 |
| | | | CA | 2147402 A1 | 01-12-1995 |
| | | | EP | 0685947 A1 | 06-12-1995 |
| | | | JP | 7336297 A | 22-12-1995 |

EPO FORM P0459

For more details about this annex : see Official Journal of the European Patent Office, No. 12/82